Europäisches Patentamt

European Patent Office

Office européen des brevets

(11) Publication number: **0 311 705 B1**

## EUROPEAN PATENT SPECIFICATION

(45) Date of publication of patent specification: **31.03.93**    (51) Int. Cl.⁵: **G06F  13/26**, G06F 15/16

(21) Application number: **87115019.9**

(22) Date of filing: **14.10.87**

(54) **Data processing system with a fast interrupt.**

(43) Date of publication of application:
**19.04.89 Bulletin  89/16**

(45) Publication of the grant of the patent:
**31.03.93 Bulletin  93/13**

(84) Designated Contracting States:
**BE CH DE ES FR GB IT LI SE**

(56) References cited:
**EP-A- 0 132 161**
**US-A- 3 993 981**
**US-A- 4 023 143**
**US-A- 4 080 649**
**US-A- 4 200 912**

(73) Proprietor: **Bull HN Information Systems Inc.**
**Corporation Trust Center 1209 Orange Street**
**Wilmington Delaware(US)**

(72) Inventor: **Barlow, George J.**
**19 Easement Road**
**Tewksbury Massachusetts 01876(US)**
Inventor: **Keeley, James W.**
**41 Parrish Hill Drive**
**Nashua New Hampshire 03063(US)**

(74) Representative: **Frohwitter, Bernhard,**
**Dipl.-Ing. et al**
**Bardehle-Pagenberg-Dost-Altenburg**
**Frohwitter-Geissler & Partner Galileiplatz 1**
**Postfach 86 06 20**
**W-8000 München 86 (DE)**

EP 0 311 705 B1

# Description

## RELATED APPLICATIONS

The following patent applications are assigned to the same assignee as the instant application, and have related subject matter:

U.S. patent application entitled, "System Management Apparatus for a Multiprocessor System", with inventors George J. Barlow, Elmer W. Carroll, James W. Keeley, Wallace A. Martland, Victor M. Morganti, Arthur Peters and Richard Zelley, having Serial Number 869,164, and filed on May 30, 1986;

U.S. patent application entitled, "Apparatus and Method for Interprocessor Communication", with inventors Victor M. Morganti, Patrick E. Prange, James B. Geyer and George J. Barlow, having Serial Number 869,147, and filed on May 30, 1986; and

U.S. patent application entitled, "Multiprocessor Level Change Synchronization Apparatus", with inventors James W. Keeley and George J. Barlow, having Serial Number 879,858, and filed on June 27, 1986.

## BACKGROUND OF THE INVENTION

### Field of Use

This investigation pertains to data processing systems and more particularly to interrupt apparatus utilized in conjunction with such systems.

### Description of the Prior Art

As is well known, many systems have processing units which employ interrupt apparatus for servicing interrupts from competing devices on a priority basis. Normally, this is achieved by assigning priority interrupt levels to the competing devices which are compared for enabling the device having the higher priority interrupt gain access to the system or processing unit. After the device's request has been serviced, the processing unit sends out a signal to the devices for indicating its readiness to service new interrupts at the current interrupt level. An example of this type of system is disclosed in U.S. Patent No. 3,984,820.

U.S. Patent No. 4,371,928 discloses a data processing system wherein the interrupt command includes a priority level of the source. This would present the problem of possibly not being able to respond quickly to the current command if another command of higher priority were received from the asynchronous system bus.

U.S. Patent No. 3,993,981 describes a system including comparator means for comparing the interrupt level of the command being executed with a new command received over the system bus.

Today's more sophisticated multiprocessing systems, however, must be able to respond quickly to commands which indicate out of tolerance environmental conditions or certain time out conditions to allow for the orderly shutdown of the system. Also, certain of the time out conditions may require a rapid real time change in the software processes being executed than was heretofore possible. This is a particular requirement when many peripheral controllers are each requesting access to the CPU's at approximately the same time.

## OBJECTS OF THE INVENTION

Accordingly, it is a primary object of the present invention to provide an improved interrupt apparatus for use on a multiprocessing system.

It is a further object of the present invention to provide an interrupt apparatus which operates at normal speed and at high speed.

## SUMMARY OF THE INVENTION

The above objects and advantages of the invention are achieved in a preferred embodiment of a multiprocessing system. According to the present invention, apparatus is included within the interrupt logic of the bus interface circuits of each processing unit of the system which connects through such interface circuits to an asynchronous system bus in common with the remaining units of the system to react to normal and high speed interrupt requests.

In normal operation, commands including address signals, data signals and control signals are transferred over the system bus. Each processing unit receives each command, certain control and address signals to determine if it should execute the command. The processing unit which recognizes the decoded address signals as its unique channel number will then compare the interrupt priority level of the current command being executed by the processing unit with the interrupt priority level of the new command. If the new command has a higher priority level then the processing unit will send an acknowledge signal out on the system bus to the source unit which initiated the command and begin executing the new command. If the new command has a lower interrupt priority level than the command being executed, then the processing unit will send a not acknowledge signal out on the system bus. The source unit will again send the command to the processing unit after a delay.

However, certain commands, particularly those that indicate an over temperature condition, an out of specification power condition, or certain time out conditions require that the processing unit take immediate action. These commands will have particular control and address signals indicating that an immediate execution of the command is necessary and the current command being executed will be interrupted and the new command will be executed by the addressed processing unit.

Certain control and address signals are applied to array logic. The control signals indicate that the command is not a response to a previous command, that it is not a level change command, that the address signals include a channel number and that this is a normal or a high speed interrupt command.

Output signals from the array logic enable the level comparison logic to initiate either the acknowledge signal or the not acknowledge signal for transfer over the system bus for the command requiring the normal interrupt.

For the high speed operation, other output signals from the array logic bypass the level comparison logic to initiate either the acknowledge or the not acknowledge signal.

Two processing units may be included in a single central subsystem which is coupled to the asynchronous system bus by a single interface. In this case, the array logic would decode the address signals representing the channel number to indicate which processing unit is responding to the command and initiate the level comparison bypass logic for the fast response or to use the level comparison logic for the normal response.

## BRIEF DESCRIPTION OF THE DRAWINGS

The manner in which the method of the present invention is performed and the manner in which the apparatus of the present invention is constructed and its mode of operation can best be understood in light of the following detailed description together with the accompanying drawings in which like reference numbers identify like elements in the several figures and in which:

Figure 1 is a block diagram of a system which includes the apparatus of the present invention.

Figure 2 shows in block diagram form the interface logic of a processing unit which includes the apparatus of the present invention.

Figure 3 shows the detailed logic of the present invention.

Figure 4 is the format of commands utilized by the apparatus of the present invention.

## DESCRIPTION OF THE PREFERRED EMBODIMENT

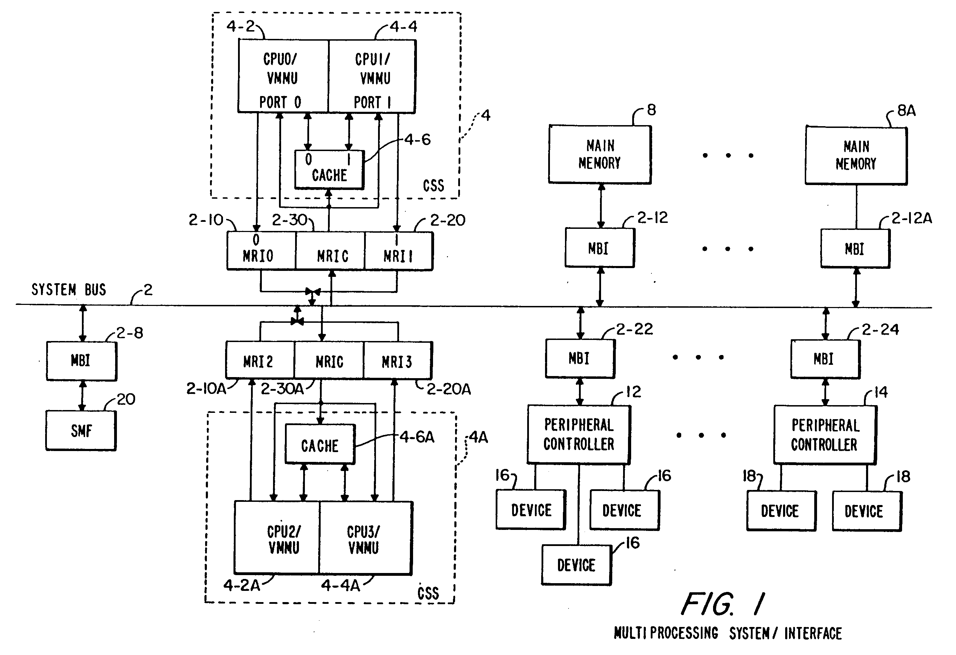

Figure 1 shows a multiprocessing system 1 which includes a number of subsystems, each coupled to an asynchronous system bus 2 via a separate interface.

These subsystems include a central subsystem (CSS) 4, coupled to system bus 2 via interfaces MRI0 2-10, MRIC 2-30 and MRI1 2-20; and a central subsystem (CSS) 4A coupled to system bus 2 via interfaces MRI2 2-16A, MRIC 2-30A and MRI3 2-20A. Interface MRI0 2-10 is identified as port 0 and interface MRI1 2-20 is identified as port 1. Interface MIRC 2-30 provides registers common to both Port 1 and Port 2. Only 2 CSS's are shown, but it is understood that any number of CSS's may be coupled to system bus 2 by their respective interfaces. Each of the interface areas include bus interface logic circuits is of the type disclosed in Figure 9 of U.S. Patent No. 3,995,258.

Also coupled to system bus 2 via an interface MBI 2-8 is a system management facility (SMF)20. A number of main memories, main memory 8 through main memory 8A are coupled to system bus 2 via interfaces MBI 2-12 through MBI 2-12A respectively. A number of peripheral controllers, peripheral controller 12 through peripheral controller 14 are coupled to system bus 2 via interfaces MBI 2-22 through MBI 2-24. Coupled to peripheral controller 12 are a number of devices 16, and coupled to peripheral controller 14 are a number of devices 18. Devices 16 through devices 18 are typically, but not limited to, keyboards, displays, communication devices, disk drives, tape drives, printers and document readers.

Each CSS includes two central processor units (CPU) with their respective virtual memory management units (VMMU) and a cache. CSS 4 includes CPU 0/VMMU 4-2, CPU 1/VMMU 4-4 and cache 4-6. CPU 0/VMMU 4-2 is coupled to system bus 2 via interfaces MRI0 2-10 and MRIC 2-30 (port 0). CPU 1/VMMU 4-4 is coupled to system bus 2 via interfaces MRI1 2-20 and MRIC 2-30A (port 1). Both CPU 0/VMMU 4-2 and CPU 1/VMMU 4-4 are coupled to port 0 and port 1, respectively, of cache 4-6. Cache 4-6 is coupled to system bus 2 via interface MRI0 2-10 through port 0 when cache 4-6 is operative with CPU 0/VMMU 4-2. Cache 4-6 is coupled to system bus 2 via interface MRI1 2-20 through port 1 when cache 4-6 is operative with CPU 1/VMMU 4-4. CSS 4 receives information from system bus 2 via interface MRIC 2-30.

The units of CSS 4A, CPU 2/VMMU 4-2A, CPU 3/VMMU 4-4A and cache 4-6A are coupled to system bus 2 in a similar manner via interfaces MRI2 2-10A, MRIC 2-30A and MRI3 2-20A.

SMF 20 controls the initialization of the system 1 as well as the monitoring a number of system and environmental functions. SMF 20 includes a watch dog timer and a real time clock which are set by commands received over system bus 2 from one of the CPU's. The SMF 20 responds when the watch dog timer or real time clock has decremented to zero by sending a corresponding command to the CPU over system bus 2 that initially set the clock. In addition, the SMF 20 monitors the power and temperature and sends commands over system bus 2 to alert the CPU's to take appropriate action. If the power of temperature changes beyond preset values, the CPU's, upon receiving the power alert or temperature alert command, respond by preparing for an orderly shutdown of the system by bringing the operating system software to a condition which will allow for an orderly restart. The SMF 20 operation is described in related application EP-A-247 605 entitled "System Management Apparatus for a Multiprocessor System".

System 1 is configured as a tightly coupled multi-CPU system since each CPU executes a single operating system and shares a common main memory. Therefore, each CPU may interrupt another CPU, or itself, by means of an Interprocessor Instruction. All communications between subsystems is done over the system bus 2 by means of commands and responses to commands.

The SMF 20 is positioned to give it the highest priority access to system bus 2. Since many of the commands requiring high speed access to a CPU are generated by the SMF 20, this positional priority assures a rapid response to the commands by the CPU to which the command is addressed.

A CPU will execute instructions of a process at a specified interrupt level. The CPU will interrupt the process to receive a command for system bus 2 only if the command calls for the CPU to execute a higher priority process.

When the CPU receives a command originated by another subsystem, it examines the interrupt priority level of the command and responds with an acknowledge signal over system bus 2 if the command has a higher priority than the command being executed. If the interrupt has a lower priority than the command being executed, then the CPU will respond with a not acknowledge signal. The subsystem that sends the command receives the acknowledge or not acknowledge response and takes appropriate action. If the not acknowledge response was received, the originating subsystem may send the command again over system bus 2 to the CPU. If at this time the CPU is executing a lower priority command, then the CPU will accept the command and sends an acknowledge response over system bus 2.

However, certain commands require that the receiving CPU take immediate action. Therefore, as described in this embodiment, the CPU will respond to certain commands by the logic of the invention to immediately interrupt a process currently being executed to execute the process called for by the new command. Typical of the commands requiring immediate action are those SMF 20 commands relating to time out, power or temperature change, and status change conditions. Also, certain CPU to CPU commands require immediate action. One CPU may interrupt another CPU by logic which is responsive to certain signals in the command.

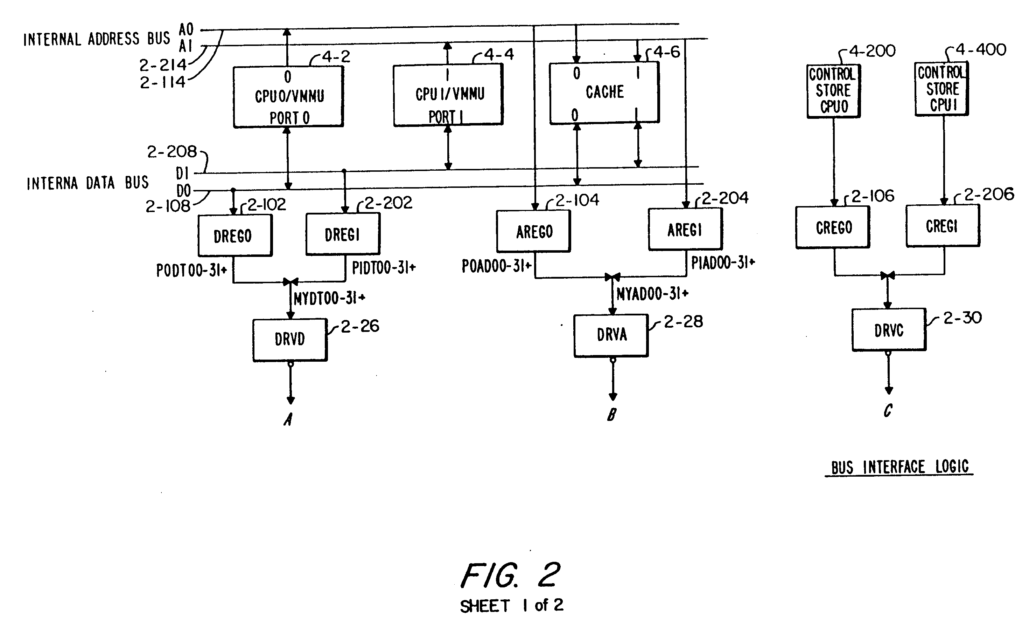

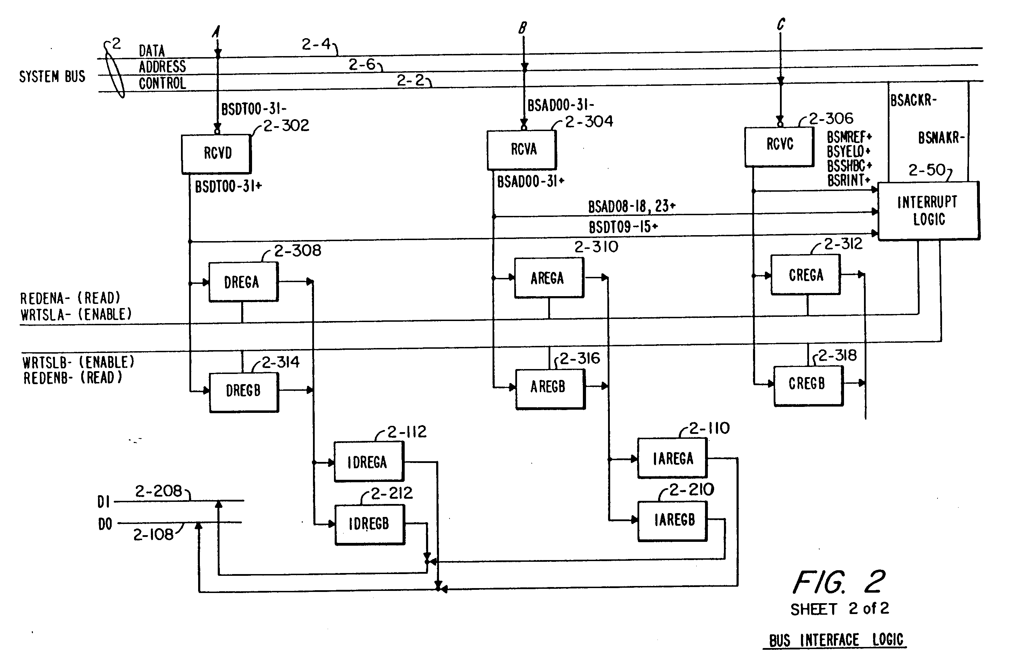

Figure 2 shows a block diagram of interfaces MRI0 2-10, MRI1 2-20 and MRIC 2-30. Port 0 interface MRI0 2-10 logic is identified by elements 2-1XX. Port 1 interface MRI1 2-20 logic is identified by elements 2-2XX, and the common interface MRIC 2-30 logic for receiving information from system bus 2 is identified by elements 2-3XX.

System bus 2 includes a system data bus 2-4, a system address bus 2-6 and a system control bus 2-2. Data bus 2-4 includes 32 data signals BSDT00- through BSDT31- and a number of parity signals (not shown). The minus sign indicates that the signal respresents a binary ONE when low and a binary ZERO when high. Address bus 2-6 includes 32 address signals BSAD00- through BSAD31- and a number of parity signals (not shown). Control bus 2-2 includes a number of control signals. Only those control signals that relate to the invention are described.

Any subsystem may request and be granted access to system bus 2 in order to transfer information to another system. The information may be in the form of a command or a response to a command. Any CPU may request and be granted access to system bus 2 to transfer information to itself, another CPU or another subsystem. Each interface receives the information and determines if the information includes an address or channel number of a unit that is coupled to that interface. If the information received by that interface does not include its channel number, then the information is ignored. Bus address signals BSAD08-17 + are decoded to form the channel number if the memory reference signal BSMREF + indicates that the address signals BSAD00 + through BSAD31 + do not indicate a main memory location. If the information is addressed to that subsystem, then the subsystem acknowledges that it received the information by sending an acknowledge signal BSACKR- out on system bus 2.

The subsystem will accept the information provided the information has its channel number and the subsystem is not executing a process with a higher priority. If the subsystem does not accept the information because it is executing a higher priority process, then it will send a not acknowledge signal BSNAKR- out on system bus 2.

Referring to Figure 2, interface MRIC 2-30 includes two sets of registers for receiving the command organized to operate in a first in - first out mode. Assume that the first command received by interface MRIC 2-30 is stored in the first set of receiving registers and is acknowledged, then the next command will be received by the second set of receiving registers. Meanwhile, the CPU that responded to its channel number has unloaded the command from the first set of receiving registers thereby making the receiving registers available for the next command if the command stored in the second set of receiving registers was acknowledged. If a command stored in the second set of receiving registers is not acknowledged, then the command is ignored and the next command is stored in the second set of receiving registers.

Data signals BSDT00-31- are received by 32 inverting receivers 2-302, respectively, from data bus 2-4. Assume that the data signals are stored in the first set of receiving registers. The data signals are stored in 8 registers DREGA 2-308 as signals BSDT00-31 + where the plus sign indicates that a logical ONE signal is high and a logical ZERO signnal is low. Similarly, 32 address signals BSDA00-31- are received by 32 inverting receivers 2-304, respectively, from address bus 2-6 and stored in 8 registers AREGA 2-310 as signals BSAD00-31 +, and a number of control signals are received by inverting receivers 2-306 and stored in register CREGA 2-312.

Interrupt logic 2-50 compares the channel number appearing as signals BSAD08 + through BSAD18 + with a preset channel number and also determines that the interrupt level of the command just received has a higher priority than the command being executed. Then, the acknowledge response is given and the data and address information is transferred to CPU 4-2 via registers IDREGA 2-112 and IAREGA 2-110 and internal data bus DO 2-108 if the channel number signals indicate CPU 4-2. If the channel number signals indicate CPU 4-4, then the data and address information is transferred to CPU 4-4 via registers IDREGB 2-212 and IAREGB 2-110 and internal data bus DI 2-208.

If the information does not include the channel number of CPU 4-2 or CPU 4-4, then no action is taken on the command stored in registers DREGA 2-308, AREGA 2-310 and CREGA 2-312. The next command transferred over system bus 2 is then stored in the same registers.

If a number of commands are sent to CPU 4-2 or 4-4 in succession, then the information in the first acknowledged command is stored in registers 2-308, 2-310 and 2-312 and the information in the second acknowledged command is stored in registers DREGB 2-314, AREGB 2-316 and CREGB 2-318. If a third command is received, the contents of registers 2-308, 2-310 and 2-312 will have been transferred to the addressed CPU so that registers 2-308, 2-310 and 2-312 will receive the command.

Registers 2-308, 2-310 ad 2-312 are enabled by write enable signal WRTSLA-. Registers 2-314, 2-316 amd 2-318 are enabled by write enable signal WRTSLB-. Signals WRTSLA- and WRTSLB- are complementary signals and toggle during each system bus 2 cycle in which the command received is acknowledged. Read enable signal REDENA- makes the output signals of registers 2-308, 2-310 and 2-312 available and read enable signal REDENB- makes the output signals of registers 2-314, 2-316 and 2-318 available. Signals REDENA-and REDENB- are also complementary signals which toggle out of phase with the write enable signals WRTSLA- and WRTSLB-.

Control signals BSMREF +, BSYELO +, BSSHBC +, BSWRIT + and BSRINT + are received by interrupt logic 2-50.

Signal BSSHBC + indicates that this command is providing information in response to a command from the subsystem that requested the information.

Signal BSRINT + is issued by CPU to indicate that it has changed interrupt priority levels and I/O devices can attempt to resume interrupting. An I/O device that previously attempted to interrupt a CPU and got a not acknowledge will not issue any more interrupts until it detects signal BSRINT- true on system bus 2.

Signal BSMREF + at logical ZERO indicates that address signals BSAD08-17 represents the channel number.

Signal BSYELO + at logical ONE and signal BSMREF + at logical ZERO indicates that this is the highest priority command and initiates the fast interrupt operation.

CPU 0 4-2 or CPU 1 4-4 may generate commands for transfer over system bus 2 to another subsystem, another CPU or to itself.

Some of the command information may be stored in cache and if not in cache, then in main memory 8 through 8A. If the information were not in cache, then the CPU would generate a command to main memory 8 through 8A requesting the data which is stored at the location specified by the address signals BSAD00-31 in the command. For this command signal, BSMREF + would be high.

CPU 4-2 sends address signals to port 0 of cache 4-6 via internal address bus A0 2-114. CPU 4-4 sends address signals to port 1 of cache 4-6 via internal address bus A1 2-214. CPU 4-2 receives data signals from port 0 of cache 4-6 over data bus D0 2-108. CPU 4-4 received data signals from port 1 of cache 4-6 over data bus DI 2-208.

Data signals from CPU 4-2 or port 0 of cache 4-6 are stored in a register DREG0 2-102 as signals P0DT00-31 + which are received via data bus DO 2-208. Data from CPU 4-4 or port 1 of cache 4-6 is stored in a register DREG1 2-202 as signals P1DT00-31 +. The data signals are wired-ORed as signals MYDT00-31 + and transferred to 32 inverting drivers DRVD 2-26 for transfer over data bus 2-4 as signals BSDT00-31-.

Similarly, address signals from CPU 4-2 are stored in a register AREGO 2-104 which are received via address bus A0 2-114 as signals P0AD00-31 + . Address signals from CPU 4-4 are stored in a register AREG1 2-204 which are received via address bus A1 2-214 as signals P1AD00-31 + . The two sets of signals are wire-ORed as signals MYAD00-31 + and applied to address bus 2-6 via 32 inverting drivers DRVA 2-28 as signals BSAD00-31-.

Control signals from CPU 4-2 are applied to control bus 2-2 via CPU 0 control store 4-200, a register CREG0 2-106 and inverting drivers DRVC 2-30. Control signals from CPU 4-4 are applied to control bus 2-2 via CPU 1 control store 4-400, a register CREG1 2-206 and inverting drivers DRVC 2-30. The logic circuits, not shown, for transferring data, address and control signals between system bus 2 and the registers are conventional in design and may take the form as disclosed in U.S. Patent 3,995,258.

The registers shown in Figure 2 are conventional and may be constructed from 74 AS 823 logic elements manufactured by Texas Instruments.

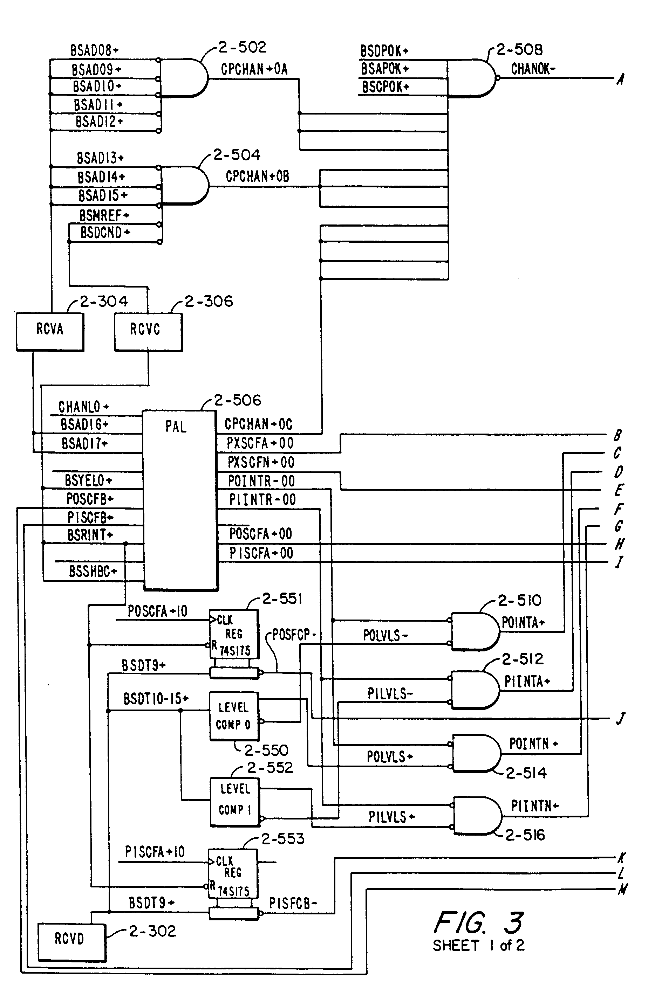

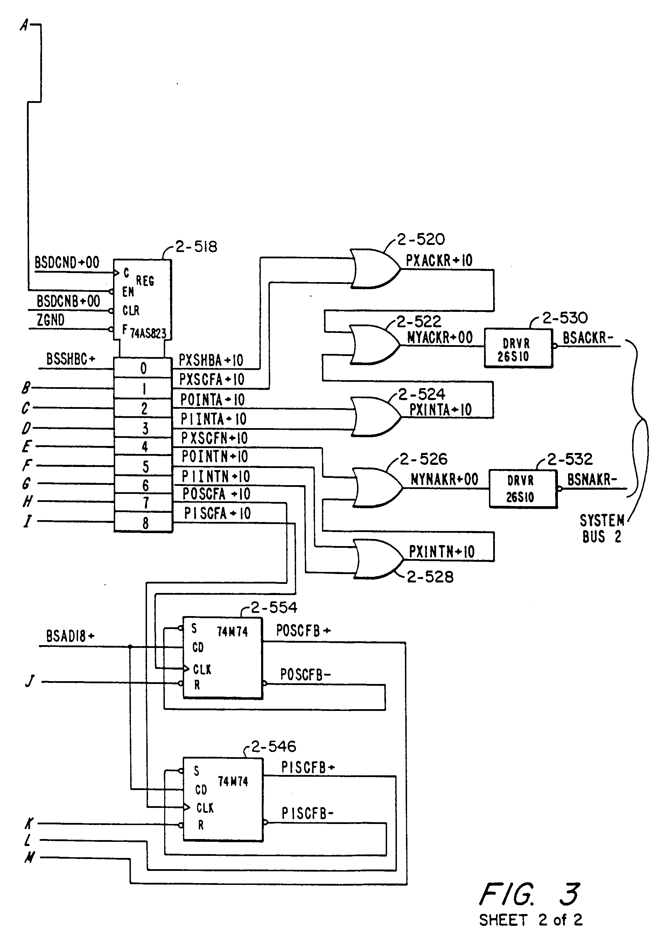

Referring to Figure 3 which shows the detailed logic of interrupt logic 2-50. Address signals BSAD08 + through BSAD17 + identify the channel number of the receiving subsystem or CPU. The channel number of CPU 4-2 is arbitrarily assigned as hexadecimal 0000 and the channel number of CPU 1 4-4 is arbitrarily assigned as hexadecimal 0040. For the CPU 0 4-2 channel number, signals BSAD08 + through BSD17 + are at binary ZERO. For the CPU 1 4-4 channel number, signals BSAD08 + through BSAD16 + are at binary ZERO and signal BSAD17 + is at binary ONE. Note that the hexadecimal notation starts with signal BSAD00 + . Therefore, signals BSAD18 + and BSAD19 + would represent the two low order bits of the next to low order hexadecimal digit and BSAD20 + through BSAD23 + represent the low order hexadecimal digit. For the purposes of the channel number indication, signals BSAD18 + and BSAD19 + are considered as binary ZERO's, however, the logic treats signals BSAD18 + and BSAD19 + as the two high order bits of the function code represented by signals BSAD18 + through BSAD23 + . The function code indicates the operation that the receiving subsystem will perform as a result of acknowledging the command received over system bus 2.

The channel number signals BSAD08 + through BSAD12 + received from address bus 2-6 via receiver 2-304 are applied to a negative AND gate 2-502 and are at binary ZERO (low). Therefore, output signal CPCHAN + 0A is at binary ONE (high). Also, channel number signals BSAD13 + through BSAD15 + are received from address bus 2-6 via receiver 2-304 and applied to a negative AND gate 2-504 are low, therefore, output signal CPCHAN + 0B is high. Signal BSMREF + received from control bus 2-2 via receiver 2-306 is low indicating that the address signals BSAD08 + through BSAD17 + represent the channel number. Bus data signal now delayed signal BSDCND + low indicates that the system bus 2 cycle is within the first 60 nanoseconds of the system bus 2 cycle.

Signals CHANLO + and BSAD16 + applied to programmable array 2-506 identify this channel number as either that of CPU 0 4-2 and CPU 1 4-4 of CSS 4, or of CPU 2 4-2A or CPU 3 4-4A of CSS 4A.

For CPU 0 4-2 and CPU 1 4-4, a channel number signal BSAD16 + is low and for CPU 2 4-2A and CPU 3 4-4A, the channel number signal BSAD16 + is high. Therfore, for CPU 0 4-2 and CPU 1 4-4 both signals BSAD16 + and CHANLO + are low, therefore, output signal CPCHAN + 0C is high. Signal CHANLO + identifies a physical slot on a backplane of systems 1 into which the board containing CSS 4A logic is plugged.

The boolean expression the signal CPCHAN + 0C is:

$$(BSAD16 +) \quad (CHANLO +) \quad + \quad (\overline{BSAD16} +) (\overline{CHANLO} +).$$

Signals CPCHAN + 0A, CPCHAN + 0B and CPCHAN + 0C, which are high, are applied to a NAND gate 2-508. Also, signals BSDPOK + , BSAPOK + and BSCPOK + high indicate that the information received over system buses 2-4, 2-6 and 2-2, respectively, had correct parity. Therefore, channel OK output signal CHANOK- goes low indicating that the information on system bus 2 is to be processed by either CPU 0 4-2 or CPU 1 4-4.

Signal CHANOK- enables a register 2-518 which retimes the signals applied to the input terminals on the rise of the data bus data cycle now delayed signal BSDCND + which occurs 60 nanoseconds after the start of the system bus 2 cycle.

For the fast response to a command, signal BSYELO + is high and signal BSMREF + is low. Output signal PXSCFA + 00 from array 2-506 high, results in an acknowledge signal BSACKR + to be sent out on system bus 2 as signal BSACKR-. Output signal PXSCFN + 00 from array 506 high, results in a not acknowledge signal BSNAKR + to be sent out on system bus 2 as signal BSACKR-. The boolean expression for signal PXSCFA + indicating an acknowledge response is:

$(\overline{\text{BSSHBC}}+)$ $(\text{BSYELO}+)$ $(((\text{BSRINT}+)+-$ $(\overline{\text{BSRINT}}+)(\text{BSAD17}+)$ $(\overline{\text{P1SCFB}}+))+((\overline{\text{BSRINT}}+)$ $(\overline{\text{BSAD17}}+)$ $(\overline{\text{P0SCFB}}+)))$.

Signal BSSHBC +, when low, indicates that this is not a second half bus cycle command received in response to a previous command that was sent out over system bus 2.

Signal BSRINT + high indicates that the execution of this command will result in a level change and the acknowledge response should be given. If this is not a level change command, then signal BSRINT is low and signals BSAD17 + high and P1SCFB + low indicate that the CPU 1 4-4 is not busy, or signals BSAD17 + low and P0SCFB + low indicate that CPU 0 4-2 is not busy. Therefore, an acknowledge response signal BSACKR + is sent out on system bus 2 as signal BSACKR-.

The boolean expression for signal PXSCFN + indicating a not acknowledge response is:

$(\overline{\text{BSSHBC}}+)$ $(\text{BSYELO}+)$ $((\overline{\text{BSRINT}}+)$ $(\text{BSAD17}+)$ $(\text{P1SCFB}+)$ + $(\overline{\text{BSRINT}}+)$ $(\overline{\text{BSAD17}}+)$ $(\text{P0SCFB}+))$.

This indicates that if the CPU whose channel number is specified is busy, that is, the corresponding signal P0SCFB + or P1SCFB + is high, then a not acknowledge response signal BSNAKR + is sent out on system bus 2 as signal BSNAKR-. Output signal P0SCFB + from a busy flop 2-554 indicates, when high, that CPU 0 4-2 is busy. Output signal P1SCFB + from a bush flop 2-546 indicates, when high, that CPU 1 4-4 is busy.

Flop 2-554 sets on the rise of signal P0SCFA + 10 from register 2-518. Signal P0SCFA + is generated by array 2-506 in accordance with the following boolean equation:

$\text{P0SCFA}+ = (\overline{\text{BSSHBC}}+)$ $(\text{BSYELO}+)$ $(\overline{\text{BSAD17}}+)$

Signal P0SCFA + is retimed by register 2-518 to generate signal P0SCFA + 10. Flop 2-554 sets on the rise of signal P0SCFA + 10 since high order function code signal BSAD18 + is high for the high speed interrupt commands from SMF 20. Signal BSAD18 + may be low for some commands generated by SMF 20 during a wraparound test operation that requires the high speed interrupt since it is presumed that the CPU's are inoperative for the test. Once flop 2-554 is set, it remains set since output signal P0SCFB-, which is low, is applied to the set input terminals of flop 2-554.

Flop 2-554 remains set until CPU 0 4-2 has completed the execution of the command. CPU 0 4-2 then generates a command to itself which forces the reset signal P0SFCB- low. For the reset flop 2-554 command, data signal BSDT9 + is high and is stored in a register 2-551 on the rise of signal P0SCFA + 10. Output signal P0SCFB- is forced low thereby resetting busy flop 2-554. Register 2-551 is reset by signal BSRINT + going low at the end of the system bus 2 cycle. CPU 0 4-2 will now acknowledge a command requiring a high speed interrupt.

Flop 2-546 operates in a similar manner to flop 2-554 to indicate, when set, that CPU 1 4-4 is busy. CPU 1 4-4 will not acknowledge a command requiring a high speed interrupt until flop 2-546 is reset.

The boolean expression to generate signal P1SCFA + is:

$\text{P1SCFA}+ = (\overline{\text{BSSHBC}}+)$ $(\text{BSYELO}+)$ $(\text{BSAD17})$

Signal P1SCFA + from array 2-506 is retimed by register 2-518 to generate signal P1SCFA + 10. Flop 2-546 sets on the rise of signal P1SCFA + since signal BSAD18 + is high. Output signal P1SCFB +, now high, is applied to array 2-506 and prevents an acknowledge response to a command with the CPU 1 4-4 channel number which requires a high speed interrupt. Signal P1SCFB- keeps flop 2-546 set until reset by another command by CPU 1 4-4 to itself. The command again generates signal P1SCFA + 10 which stores signal BSDT9 + into a register 2-553. Reset signal P1SFCB- is forced low thereby resetting flop 2-553. Signal BSRINT + then resets register 2-553 at the end of the system bus 2 cycle when it goes low.

The acknowledge signal for the fast interrupt which is generated by signal PXSCFA + is applied to an OR gate 2-520 to generate signal MYACKR + via output signal PXACKR + and an OR gate 2-522. Signal MYACKR + is applied to a driver 2-530 to generate signal BSACKR- over system bus 2.

Similarly, the not acknowledge signal BSNAKR- is generated by signal PXSCFN +, register 2-518, signal PXSCFN + 10, an OR gate 2-526, signal MYNAKR +, a driver 2-532, and system bus 2 signal BSNAKR-.

Signal MYACKR + also causes the command received from system bus 2 and stored in registers 2-308, 2-310, and 2-312, Figure 2 to remain in the registers for subsequent execution by generating signal WRTSLB-. The next command is stored in registers 2-314, 2-316 and 2-318. If that command is acknowledged, then complementary signal WRTSLA- is generated and registers 2-308, 2-310 and 2-312 are available.

The normal signal bus 2 interrupt operation is initiated by signal BSYELO + of the command that was received being low. In this case, signal P0INTR- from array 2-506 is generated if the information on system bus 2 is to interrupt CPU 0 4-2 or signal P1INTR- is generated if the information on system bus 2 is to interrupt CPU 1 4-4.

The boolean expressions are:

$$P0INTR- = (\overline{BSSHBC}+)\ (\overline{BSYELO}+)\ (\overline{BSAD17}+)$$
$$P1INTR = (\overline{BSSHBC}+)\ (\overline{BSYELO}+)\ (BSAD17+)$$

Signal P0INTR- is applied to an input terminal of negative AND gates 2-510 and 2-514. Signal P0LVLS- is applied to the other terminal of negative AND gate 2-510 and signal P0LVLS+ is applied to the other terminal of negative AND gate 2-514.

Similarly, signal P1INTR- is applied to an input terminal of negative AND gates 2-512 and 2-516. Signal P1LVLS- is applied to the other terminal of negative AND gate 2-512 and signal P1LVLS+ is applied to the other terminal of negative AND gate 2-516.

Signal P0LVLS-, when low, indicates that CPU 0 4-2 is executing a lower priority routine and an acknowledge response is sent over system bus 2.

Signal P1LVLS-, when low, indicates the CPU 1 4-4 is executing a lower priority routine and the acknowledge response is sent over system bus 2.

Signal P0LVLS+ or signal P1LVLS+, when low, indicates that CPU 0 4-2 or CPU 1 4-4, respectively, are executing a higher priority routine and a not acknowledge response is sent over system bus 2.

Output signals P0INTA+, P0INTN+ and P1INTN+ from negative AND gates 2-510, 2-512, 2-514 and 2-516, respectively, are stored in register 2-518.

For the acknowledge response, if either one of signals P0INTA+ or P1INTA+ which are applied to an OR gate 2-524 are high, then the BSACKR- signal is generated as before via driver 2-530, signal MYACKR+, OR gate 2-522 and signal PXINTA+. For the not acknowledge response, if either signals P0INTN+ or P1INTN+ which are applied to an OR gate 2-528 then the BSNAKR- signal is generated via driver 2-532, signal MYNACKR, OR gate 2-526 and signal PXINTN+.

The priority level comparison for CPU 0 4-2 is made by level comparator 0 2-550. The priority level comparison for CPU 1 4-4 is made by level comparator 1 2-552. Comparator 0 1-550 stores the priority level of the routine being executed by CPU 0 4-2 and comparator 1 2-550 stores the priority level of the routine being executed by CPU 1 4-4. The interrupt priority level of the new command is applied to comparators 2-550 and 2-552 as data signals BSDT10-15+.

Both comparators 2-550 and 2-552 compare the incoming interrupt priority level represented by data signals BSDT10-15+ with the interrupt priority levels stored in the respective comparators. Signal P0LVLS- low indicates that the interrupt priority level of the new command is higher than the interrupt priority level of the command being executed by CPU 0 4-2. Signal P1LVLS- low indicates that CPU 1 4-4 is executing a lower interrupt priority level command. Signals P0LVLS- and P1LVLS- are applied to negative AND gates 2-510 and 2-512, respectively.

Signal P0LVLS+ low indicates that CPU 0 4-2 is executing a higher interrupt priority level command than interrupt priority level of the new command. Signal P1LVLS+ low indicates that CPU 1 4-2 is executing a higher interrupt priority level command than the interrupt priority level of the new command. Signals P0LVLS+ and P1LVLS+ are applied to negative AND gates 2-514 and 2-516, respectively.

Signal P0INTR- from array 2-506 is applied to negative AND gates 2-510 and 2-514 to select signal P0LVLS-, if low, to generate signal P0INTA+ from negative AND 2-510 to indicate an acknowledge response; or to select signal P0LVLS+, if low, to generate signal P0INTN+ from negative AND gate 2-514 to generate a not acknowledge response.

Signal P1INTR- from array 2-506 is applied to negative AND gate 2-512 and 2-516 to select signal P1LVLS-, if low, to generate signal P1INTA+ for an acknowledge response, or select signal P1LVLS-, if low, to generate signal P1INTR+ for a not acknowledge response.

Signals P0INTA+, P1INTA+, P0INTN+ and P1INTN+ are stored in register 2-518. Output signals P0INTA+10 and P1INTA+10 are applied to an OR gate 2-524 to generate the acknowledge signal MYACKR+ via signal PXINTA+ and OR gate 2-522. Signals P0INTN+10 and P1INTN+10 are applied to an OR gate 2-528 to generate the not acknowledge signal MYNAKR+ via signal PXINT1+10 and OR gate 2-526.

The logic elements of Figure 3 are conventional in design and described in the TTL Data Book for Design Engineers, Second Edition, and published by Texas Instruments.

The level change operation is described in related application, EP-A-251234.

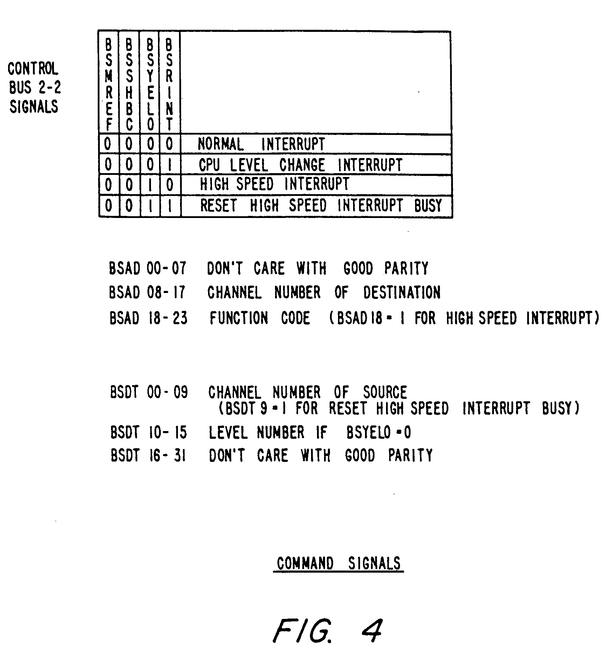

Figure 4 shows the layouts of the data address and address fields and the pertinent control signals in the control field of the command. For the normal interrupt, the control signals memory reference signal BSMREF+, second half bus cycle signal BSSHBC+, the bus yellow fast interrupt signal BSYELO+, and the resume interrupting signal BSRINT are all low. The address signals BSAD08-17+ indicate the channel number of the destination CPU. Address signals BSAD18-23 give the function code. The data signals BSDT00 -09 provide the channel number of the source. Data signals BSDT10-15 + indicate the interrupt priority level number of the command.

For a CPU interrupt level change command signal BSRINT + is high. Address signals BSAD08-17 + again indicate the channel number of the destination CPU. Address signals BSAD18-23 provide the function code indicating a level change. Data signals 00-09 + give the channel number of the source CPU since level changes are initiated by a CPU and data signals 10-15 + provide the new interrupt priority level.

For the high speed interrupt control signal BSYELO + is high. Address signals BSAD08-17 indicate the channel number of the destination CPU. Address signals BSAD18-23 + give the function code with the high order bit BSAD18 + being high and data signals BSDT00-09 provide the channel number of the source, hexadecimal OF for the SMF20.

For the reset high speed interrupt busy command, control signals BSYELO + and BSRINT are high. The CPU that is resetting its busy flop generates its own channel number and data signal BSDT9 + high. CPU 0 4-2 sends out this command to reset flop 2-554 and CPU 1 4-4 sends out the command with its channel number to reset flop 2-546. Resetting the flops allows the CPU's to receive the next high speed interrupt command.

## Claims

1. Data processing system with a plurality of units (4-2, 4-4, 4-2A, 4-4A, 12, 14, 20) which are coupled together for communication thereby operating in a transmitting or receiving mode, and with a system bus (2) to which said units are connected, wherein at least one of said units (CPU/VMMU; 4-2/2A, 4-4/4A) is a processing unit for executing at a particular time any one of a plurality of different kinds of processes, each different kind of process being assigned a different priority level for execution, each of said units when in a transmitting mode transmits a command over the system bus including an address field coded to specify a channel number indicating the address of a processing unit which is requested to place a process into execution which command further comprises a description of the requested process (BSAD) and the priority level (BSDT) of the requested process; said units comprising first apparatus (2-302, 2-304, 2-50) to receive said command (BSAD, BSDT), to compare the priority level of the request with the priority level of the process currently being executed by said processing unit, and, if the request priority level (BSDT) is greater than said current level, to acknowledge to the transmitting unit which issued the request the acceptance of the request and to cause the processing unit to cease executing the current process and initiate execution of the requested process; at least one of said units (20) being able to cause a processing unit to immediately execute a requested process without consideration of the priority level of the requested process in regard to the priority level of the process currently being executed by said processing unit, **characterized in that** any unit which in its transmitting mode is capable of requesting a process to be immediately executed by a processing unit is coupled to second apparatus (2-8, MBI) to generate a unique interrupt signal (BSYELO) for its transmission together with the description of the requested process (BSAD) over the system bus (2) to said processing unit (for example, 4-2) which comprises logic circuits (2-506, 2-518, 2-520, 2-522, 2-530) responsive to said unique interrupt signal (BSYELO) for immediately acknowledging acceptance (BSACKR) to the said requesting unit, the logic connections in said logic circuits (2-506) being arranged such that the level comparison circuitry (2-550, 2-552, 2-510, 2-512) which is provided for the normal response is bypassed, thereby causing said processing unit to immediately cease execution of the current process and to initiate the execution of the requested process.

2. Data processing system of claim 1, characterized in that said units which in their transmitting mode are capable of requesting a process to be immediately executed by a processing unit, identify the requested processing unit by a channel signal (BSAD 08-17) which is transmitted over the system bus (2) together with the description of the requested process (BSAD 18-23 with 18 = 1) and the unique interrupt signal (BSYELO), and said processing unit (for example, 4-2) comprises further logic circuits (2-502, 2-504, 2-508) for receiving said channel signal and delivering an identification signal (CHANOK) if said channel signal (BSAD 08-17) is identical with the channel number of said processing unit, and for causing the generation of said acknowledging acceptance signal (BSACKR) upon receipt of said identification signal (CHANOK over line A to 2-518) and said unique interrupt signal (BSYELO).

3. Data processing system of claim 1 or 2, characterized in that it comprises

- command generating means (2-10/A, 2-20/A, 2-30/A, MBI) coupled to said requesting units and to the system bus (2) for applying said command (BSAD, BSDT) to said bus during bus cycles of operation granted to said receiving processing unit, the command including an address field (BSAD 08-17) coded to specify a channel number indicating the address of said processing unit, said command further including a control field including a memory reference signal (BSMREF) indicating that said address field is coded to specify said channel number, an interrupt type signal in a first state specifying a normal interrupt and in a second state specifying a fast interrupt (BSYELO).

4. Data processing system of claims 1, 2, or 3, characterized in that said receiving processing units further comprise

- channel decoder means (2-502, 504, 506) for generating an output signal (CHANOK) when the channel number matches with the address of the processing unit;
- array means (2-506) coupled to said system bus (2) and said channel decoder means and responsive to said interrupt type signal in said second state (BSYELO) and said channel address signals (BSAD) to generate processor immediate interrupt signals (P0INTR, P1INTR);
- busy means (2-554, 546) coupled to said bus and said array means to indicate (P0SCFB or P1SCFB) that the processing unit whose channel number is specified is busy; and
- response means (2-518-532) coupled to said array means and said system bus and responsive to the signals generated by said array means to generate either yes- or not-acknowledging signals (BSACKR, BSNAKR) for sending these signals via said system bus (2) to the transmitting unit which issued the request.

5. Data processing system of claim 3, characterized in that the commands generated by the command generating means of said requesting units and transferred over system bus (2) are able to initiate the high speed interrupt in any one unit of said plurality of units, also in itself.

**Patentansprüche**

1. Datenverarbeitungssystem mit einer Vielzahl von Einheiten (4-2, 4-4, 4-2A, 4-4A, 12, 14, 20), die miteinander gekoppelt sind zur Kommunikation, wodurch sie in einem übertragenden oder empfangenden Modus betrieben werden, und mit einem Systembus (2), mit dem die Einheiten verbunden sind, wobei wenigstens eine der Einheiten (CPU/VMMU; 4-2/2A, 4-4/4A) eine Verarbeitungseinheit ist zum Ausführen zu einem bestimmten Zeitpunkt von irgendeinem einer Vielzahl von verschiedenen Arten von Prozessen, wobei jede unterschiedliche Art von Prozessen einer unterschiedlichen Prioritätsstufe zur Ausführung zugeordnet ist, wobei jede Einheit, wenn sie im übertragenden Modus ist, einen Befehl über den Systembus überträgt, der ein Adressfeld einschließt, das kodiert ist, um eine Kanalnummer anzugeben, die die Adresse einer Verarbeitungseinheit anzeigt, die angefordert wurde, einen Prozeß in Ausführung zu bringen, dessen Befehl weiterhin eine Beschreibung des angeforderten Prozesses (BSAD) und die Prioritätsstufe (BSDT) des angeforderten Prozesses aufweist; die genannten Einheiten weisen eine erste Apparatur (2-302, 2-304, 2-50) auf, um den Befehl (BSAD, BSDT) zu empfangen, um die Prioritätsstufe der Anforderung mit der Prioritätsstufe des gerade von dieser Verarbeitungseinheit ausgeführten Prozesses zu vergleichen, und, wenn die Anforderungsprioritätsstufe (BSDT) größer als die momentane Stufe ist, der übertragenden Einheit, die die Anforderung ausgegeben hat, die Annahme der Anforderung zu bestätigen und die Verarbeitungseinheit zu veranlassen, die Ausführung des momentanen Prozesses zu beenden und die Ausführung des angeforderten Prozesses einzuleiten; wenigstens eine der Einheiten (20) ist in der Lage, eine Verarbeitungseinheit zu veranlassen, sofort einen angeforderten Prozeß auszuführen ohne Berücksichtigung der Prioritätsstufe des angeforderten Prozesses bezüglich der Prioritätsstufe des von dieser Verarbeitungseinheit gerade ausgeführten Prozesses, **dadurch gekennzeichnet,** daß irgendeine Einheit, die in ihrem übertragenden Modus in der Lage ist, einen Prozeß anzufordern, der sofort durch die Verarbeitungseinheit ausgeführt werden soll, mit einer zweiten Apparatur (2-8, MBI) gekoppelt ist, um ein eindeutiges Unterbrechungssignal (BSYELO) für ihre Übertragung zusammen mit der Beschreibung des angeforderten Prozesses (BSAD) über den Systembus (2) an die Verarbeitungseinheit (z.B. 4-2) zu erzeugen, die Logikschaltungen (2-506, 2-518, 2-520, 2-522, 2-530) aufweist, die auf das eindeutige Unterbrechungssignal (BSYELO) antworten, um die Annahme (BSACKR) an die anfordernde Einheit zu bestätigen, wobei die Logikverbindungen in den Logikschaltungen (2-506) so angeordnet sind, daß die Stufenvergleichsverschalttechnik (2-550, 2-552, 2-510, 2-512), die für die normale Antwort vorgesehen ist, übergangen wird, wodurch die Verarbeitungseinheit veranlaßt wird, sofort die Ausführung des momentanen Prozesses zu beenden und die Ausführung des angeforderten Prozesses einzuleiten.

2. Datenverarbeitungssystem gemäß Anspruch 1, dadurch gekennzeichnet, daß die Einheiten, die in ihrem übertragenden Modus in der Lage sind, einen Prozeß anzufordern, der sofort von einer Verarbeitungseinheit ausgeführt werden soll, die angeforderte Verarbeitungseinheit durch ein Kanalsignal (BSAD08-17) identifiziert, das über den Systembus (2) zusammen mit der Beschreibung des angeforderten Prozesses (BSAD 18-23, mit 18 = 1) und dem eindeutigen Unterbrechungssignal (BSYELO) übertragen wird, und die Verarbeitungseinheit (z.B. 4-2) weitere Logikschaltungen (2-502, 2-504, 2-508) aufweist zum Empfangen des Kanalsignals und zum Ausgeben eines Identifikationssignals (CHANOK), wenn das Kanalsignal (BSAD 08-17) identisch mit der Kanalnummer der Verarbeitungseinheit ist, und zum Veranlassen der Erzeugung des bestätigenden Annahmesignals (BSACKR) nach Empfang des Identifikationssignals (CHANOK über Leitung A zu 2-518) und des eindeutigen Unterbrechungssignals (BSYELO).

3. Datenverarbeitungssystem gemäß Anspruch 1 oder 2, dadurch gekennzeichnet, daß es Befehlserzeugungseinrichtungen (2-10/A, 2-20/A, 2-30/A, MBI) aufweist, die an die anfordernden Einheiten und an den Systembus (2) gekoppelt sind zum Anlegen des Befehls (BSAD, BSDT) an den Bus während Busbetriebszyklen, die der empfangenden Verarbeitungseinheit zugeteilt sind, wobei der Befehl ein Adressfeld (BSAD 08-17) einschließt, das kodiert ist, um eine Kanalnummer anzugeben, die die Adresse der Verarbeitungseinheit anzeigt, und wobei der Befehl weiterhin ein Steuerfeld einschließt, daß ein Speicherreferenzsignal (BSMREF) einschließt, das anzeigt, daß das Adressfeld kodiert ist, um die Kanalnummer anzugeben, wobei ein unterbrechungsartiges Signal in einem ersten Zustand eine normale Unterbrechung angibt und in einem zweiten Zustand eine schnelle Unterbrechung (BSYELO) angibt.

4. Datenverarbeitungssystem gemäß den Ansprüchen 1, 2 oder 3, dadurch gekennzeichnet, daß die empfangenden Verarbeitungseinheiten weiterhin aufweisen:
   Kanaldekodiereinrichtungen (2-502, 504, 506) zum Erzeugen eines Ausgabesignals (CHANOK), wenn die Kanalnummer mit der Adresse der Verarbeitungseinheit übereinstimmt;
   eine Matrixeinrichtung (2-506), die an den Systembus (2) und die Kanaldekodiereinrichtungen gekoppelt ist und auf das unterbrechungsartige Signal in dem zweiten Zustand (BSYELO) und die Kanaladressensignale (BSAD) antwortet, um Prozessor-unmittelbare Unterbrechungssignale (P0INTR, P1INTR) zu erzeugen;
   Belegtanzeigeeinrichtungen (2-554, 546), die an den Bus und die Matrikeinrichtung gekoppelt sind, um anzuzeigen (P0SCFB oder P1SCFB), daß die Verarbeitungseinheit, deren Kanalnummer angegeben ist, belegt ist; und
   Antworteinrichtungen (2-518-532), die an die Matrikeinrichtung und den Systembus gekoppelt sind und auf die von der Matrixeinrichtung erzeugten Signale antworten, um entweder Ja- oder Neinbestätigende Signale (BSACKR, BSNAKR) zu erzeugen zum Senden dieser Signale über den Systembus (2) zu der Übertragungseinheit, die die Anforderung ausgegeben hat.

5. Datenverarbeitungssystem gemäß Anspruch 3, dadurch gekennzeichnet, daß die Befehle, die von den Befehlserzeugungseinrichtungen der anfordernden Einheiten erzeugt sind und über den Systembus (2) übertragen werden, in der Lage sind, eine Hochgeschwindigkeitsunterbrechung in irgendeiner Einheit der Vielzahl von Einheiten einzuleiten, auch in sich selbst.

**Revendications**

1. Système de traitement de données comportant une pluralité d'unités (4-2, 4-4, 4-2A, 4-4A, 12, 14, 20) qui sont couplées ensemble pour une communication afin de fonctionner ainsi dans un mode d'émetteur ou de récepteur , et comportant un bus de système (2) auquel lesdites unités sont connectées, dans lequel au moins une desdites unités (CPU/VMMU; 4-2/2A, 4-4/4A) est une unité de traitement pour exécuter à un temps particulier n'importe lequel d'une pluralité de types différents de traitements, chaque type différent de traitement ayant un niveau de priorité différent qui lui est affecté pour son exécution, chacune desdites unités émettant sur le bus du système, quand elle est dans un mode d'émetteur, une commande incluant une zone d'adresse codée pour spécifier un numéro de canal indiquant l'adresse d'une unité de traitement qui est demandée pour mettre un traitement en état d'exécution, cette commande comprenant en outre une description du traitement demandé (BSAD) et le niveau de priorité (BSDT) du traitement demandé; lesdites unités comprenant un premier dispositif (2-302, 2-304, 2-50) pour recevoir ladite commande (BSAD, BSDT), pour comparer le niveau de priorité de la demande au niveau de priorité du traitement alors en cours d'exécution par ladite unité de traitement, et, si le niveau de priorité demandé (BSDT) est supérieur audit niveau en cours, pour accuser réception de la demande à l'unité émettrice qui a émis la demande et pour faire en sorte que l'unité de traitement cesse l'exécution du traitement en cours et déclenche l'exécution du traitement demandé; au moins une desdits unités (20) étant capable de faire en sorte qu'une unité de traitement exécute immédiatement un traitement demandé sans tenir compte du niveau de priorité du traitement demandé par rapport au niveau de priorité du traitement alors en cours d'exécution par ladite unité de traitement,

caractérisé en ce que toute unité qui,dans son mode d'émetteur , est capable de demander qu'un traitement soit immédiatement exécuté par une unité de traitement est couplée à un second dispositif (2-8,MBI) pour engendrer un signal d'interruption unique (BSYELO) pour son émission avec la description du traitement demandé (BSAD) sur le bus de système (2) jusqu'à ladite unité de traitement (par exemple, 4-2) qui comprend des circuits logiques (2-506,2-518,2-520,2-522,2-530) réagissant audit signal d'interruption unique (BSYELO) pour immédiatement accuser réception (BSACKR) à ladite unité demandeuse , les connexions logiques dans lesdits circuits logiques (2-506) étant disposées de telle manière que les circuits de comparaison de niveaux (2-550,2-552, 2-510,2-512) prévus pour la réponse normale sont contournés, ceci ayant pour effet que ladite unité de traitement cesse immédiatement l'exécution du traitement en cours et déclenche l'exécution du traitement demandé.

2. Système de traitement de données selon la revendication 1, caractérisé en ce que lesdites unités qui, dans leur mode d'émetteur,sont capables de demander qu'un traitement soit immédiatement exécuté par une unité de traitement, identifient l'unité de traitement demandée par un signal de canal (BSAD 08-17) qui est émis sur le bus de système (2) avec la description du traitement demandé (BSAD 18-23 avec 18 = 1) et le signal d'interruption unique (BSYELO), et ladite unité de traitement (par exemple, 4-2) comprend d'autres circuits logiques (2-502,2-504,2-508) pour recevoir ledit signal de canal et produire un signal d'identification (CHANOK) si ledit signal de canal (BSAD 08-17) est identique au numéro de canal de ladite unité de traitement, et pour entraîner la génération dudit signal d'accusé de réception (BSACKR) à la réception dudit signal d'identification (CHANOK sur la ligne A vers 2-518) et dudit signal d'interruption unique (BSYELO).

3. Système de traitement de données selon l'une quelconque des revendications 1 et 2, caractérisé en ce qu'il comprend :
   un moyen générateur de commande (2-10/A,2-20/A, 2-30/A,MBI) couplé auxdites unités demandeuses et au bus de système (2) pour appliquer ladite commande (BSAD,BSDT) audit bus pendant des cycles de fonctionnement du bus accordés à ladite unité de traitement réceptrice, la commande incluant une zone d'adresse (BSAD 08-17) codée pour spécifier un numéro de canal indiquant l'adresse de ladite unité de traitement, ladite commande incluant en outre une zone de commande incluant un signal de référence de mémoire (BSMREF) indiquant que ladite zone d'adresse est codée pour spécifier ledit numéro de canal, un signal de type d'interruption,dans un premier état , spécifiant une interruption normale et, dans un second état, spécifiant une interruption rapide (BSYELO).

4. Système de traitement de données selon l'une quelconque des revendications 1 à 3 caractérisé en ce que lesdites unités de traitement réceptrices comprennent en outre :
   un moyen décodeur de canal (2-502,504,506) pour engendrer un signal de sortie (CHANOK) quand le numéro de canal correspond à l'adresse de l'unité de traitement;
   un moyen à réseau (2-506) couplé audit bus de système (2) et audit moyen décodeur de canal et réagissant audit signal de type d'interruption dans ledit second état (BSYELO) et auxdits signaux d'adresse de canal (BSAD) pour engendrer des signaux d'interruption immédiate de processeur (P0INTR, P1INTR);
   un moyen indicateur d'état occupé (2-554,546) couplé audit bus et audit moyen à réseau pour indiquer (P0SCFB ou M1SCFB) que l'unité de traitement dont le numéro de canal est spécifié est occupée; et

un moyen de réponse (2-518-532) couplé audit moyen à réseau et audit bus de système et réagissant aux signaux engendrés par ledit moyen à réseau pour engendrer des signaux d'accusé de réception ou d'absence d'accusé de réception (BSACKR,BSNAKR) afin d'envoyer ces signaux par ledit bus de système (2) à l'unité émettrice qui a émis la demande.

5. Système de traitement de données selon la revendication 3, caractérisé en ce que les commandes générées par le moyen générateur de commande desdites unités demandeuses et transférées sur le bus de système (2) permettent de déclencher l'interruption rapide dans n'importe quelle unité de ladite pluralité des unités, également dans cette unité proprement dite.

*FIG. 1*

MULTI PROCESSING SYSTEM / INTERFACE

INTERNAL ADDRESS BUS

INTERNAL ADDRESS BUS $\begin{array}{c} A0 \\ AI \end{array}$

2-214
2-114

| 0 | CPU0/VMMU PORT 0 | 4-2 |
| 1 | CPU I/VMMU PORT I | 4-4 |
| 0 | 1 | CACHE | 4-6 |
| 0 | | |

2-208
INTERNA DATA BUS  DI
D0
2-108

CONTROL STORE CPU0 4-200

CONTROL STORE CPU I 4-400

| DREG0 2-102 | DREGI 2-202 | AREG0 2-104 | AREGI 2-204 |

CREG0 2-106

CREGI 2-206

PODT00-31+          PIDT00-31+

POAD00-31+          PIAD00-31+

MYDT00-31+

MYAD00-31+

DRVD 2-26

DRVA 2-28

DRVC 2-30

A

B

C

BUS INTERFACE LOGIC

*FIG. 2*

SHEET I of 2

EP 0 311 705 B1

15

FIG. 2

SHEET 2 of 2

BUS INTERFACE LOGIC

*FIG. 3*
SHEET 1 of 2

EP 0 311 705 B1

*FIG. 3*
SHEET 2 of 2

18

| B S M R E F | B S S H B C | B S Y E L O | B S R I N T | |
|---|---|---|---|---|
| CONTROL BUS 2-2 SIGNALS | | | | |
| 0 | 0 | 0 | 0 | NORMAL INTERRUPT |
| 0 | 0 | 0 | I | CPU LEVEL CHANGE INTERRUPT |
| 0 | 0 | I | 0 | HIGH SPEED INTERRUPT |
| 0 | 0 | I | I | RESET HIGH SPEED INTERRUPT BUSY |

BSAD 00-07    DON'T CARE WITH  GOOD PARITY

BSAD 08-17    CHANNEL NUMBER OF DESTINATION

BSAD 18-23    FUNCTION CODE  (BSAD18 = I FOR HIGH SPEED INTERRUPT)


BSDT 00-09    CHANNEL NUMBER OF SOURCE
              (BSDT 9 = I FOR RESET HIGH SPEED INTERRUPT BUSY)

BSDT 10-15    LEVEL NUMBER IF  BSYELO = 0

BSDT 16-31    DON'T CARE WITH GOOD PARITY


COMMAND SIGNALS

# FIG. 4

19